# EUROPEAN PATENT SPECIFICATION

(11) **EP 2 605 380 B1**
(45) Date of publication and mention of the grant of the patent: **20.02.2019**
(21) Application number: 12197185.7
(22) Date of filing: 14.12.2012
(51) Int. Cl.: H02K 9/06, H02K 1/08, H02K 1/16

(54) **Rotating electric machine, rail vehicle and electric vehicle equipped therewith**
Drehende elektrische Maschine sowie ein Schienenfahrzeug und ein elektrisches Fahrzeug enthaltend besagte Maschine
Machine électrique rotative, véhicule ferroviaire et véhicule électrique équipé de celui-ci

(30) Priority: 15.12.2011 JP 2011274046
(43) Date of publication of application: 19.06.2013
(73) Proprietor: Hitachi, Ltd., Tokyo 100-8280 (JP)
(72) Inventor: Sugimoto, Shinji, Tokyo 100-8220 (JP); Komura, Akiyoshi, Tokyo 100-8220 (JP); Kimura, Mamoru, Tokyo 100-8220 (JP); Masuda, Seikichi, Tokyo 100-8220 (JP); Fujieda, Masayasu, Tokyo 100-8220 (JP); Otake, Shunsuke, Tokyo 100-8220 (JP); Koike, Masatoshi, Tokyo 100-8220 (JP); Endo, Mikio, Tokyo 100-8220 (JP)
(74) Representative: MERH-IP Matias Erny Reichl Hoffmann Patentanwälte PartG mbB

(56) References cited:
- WO-A2-2011/051228
- FR-A1- 2 349 228
- GB-A- 826 423
- JP-A- 2011 166 908
- US-A1- 2006 226 717

## Description

### Technical Field

The present invention relates to rotating electric machines, and rail vehicles and electric vehicles equipped therewith, and particularly to rotating electric machines suitable to be cooled with air inside the machine and air outside the machine, and rail vehicles and electric vehicles equipped therewith.

### Background Art

In general, cooling methods for rotating electric machines include three methods, that is, cooling by circulating air inside the machine (inside air) by means of an inner fan arranged inside the machine, cooling by ventilating air outside the machine (outside air) around the outer surface of the machine by means of an outer fan arranged outside the machine, and using the former and the latter together.

These cooling methods for rotating electric machines are disclosed in the following Patent Literatures(PTL) 1 to 4. Cooling methods for rotating electric machines disclosed in Japanese Patent Laid-open No. 2003-143809 (PTL 1) and Japanese Patent Laid-Open No. Hei 9(1997)-149599 (PTL 2) are characterized in that cooling method by circulating inside air by means of an inner fan arranged inside the machine and cooling method by ventilating outside air around the outer surface of the machine by means of an outer fan arranged outside the machine are used together, and cooling methods for rotating electric machines disclosed in Japanese Patent Laid-open No. 2006-271081 (PTL 3) and Japanese Patent Laid-Open No. Hei 6(1994)-6958 (PTL 4) are characterized in that outside air is ventilated around the inner circumference part of the machine.

### Citation List

### Patent Literature

{PTL 1}
   Japanese Patent Laid-open No. 2003-143809
{PTL 2}
   Japanese Patent Laid-Open No. Hei 9(1997)-149599
{PTL 3}
   Japanese Patent Laid-open No. 2006-271081
{PTL 4}
   Japanese Patent Laid-Open No. Hei 6(1994)-6958

WO 2011/051228 A2 relates to a wind power generator having a closed inner coolant circuit, having a stator implemented as sheet metal and comprising a winding system forming winding heads at the end faces of the stator, wherein the stator is enclosed by a cooling shell at least in the area of the laminated core thereof, wherein permanent magnets of a rotor are disposed on a magnet wheel shell implemented as a hollow shaft.

US 2006/226717 A1 relates to a configuration where a first minute gap is formed between the front end of a ventilation fan and a first bracket and a second minute gap is formed between the front end of a partition member and a second bracket; a first aperture is provided in a location at the inner periphery further inward than the vanes on the bearing bracket; a current of cooling air is formed by introduction of external air by the ventilation fan from this aperture; this current of cooling air is again discharged to the outside through a ventilation passage of the first bracket and a ventilation passage on the outer peripheral side of the stator core.

### Summary of Invention

### Technical Problem

However, about cooling described in PTL 1 and 2, there is a problem where since a rotor is cooled only by
circulation of inside air, inside air becomes high in temperature during circulation, whereby the temperature of the rotor is raised.

In addition, in the case of a permanent magnet motor where permanent magnets are arranged in the rotor, since there is a fear that the permanent magnet may cause demagnetization at high temperature when inside air becomes high in temperature during circulation, the rotor needs to be cooled efficiently.

On the other hand, about cooling described in PTL 3 and 4, there is a problem where since cooling is made only by outside air ventilation and there is no inside air circulation that cools coil end part of a stator, the coil end part of the stator becomes high in temperature.

The present invention is performed in view of the problems described above, and the object is to provide a rotating electric machine, in which not only inside air but also the coil end part of the stator are prevented from becoming high in temperature, the permanent magnet is prevented from causing demagnetization at high temperature in the case of permanent magnet type, and the cooling performance is improved, and a rail vehicle and an electric vehicle equipped with the rotating electric machine.

### Solution to Problem

In order to achieve the object described above, a rotating electric machine of the present invention according to appended claims 1 and 3 is provided. Additional aspects are provided according to dependent claims 2, 4 to 13.

In addition, in order to achieve the object described above, a rail vehicle of the present invention has a truck, a rotating electric machine, a speed increasing gear, and wheels, the rotating electric machine drives the wheels via the speed increasing gear, and the rotating electric machine has the construction described above.

Moreover, in order to achieve the object described above, an electric vehicle of the present invention has a body, wheels, an axle, and a rotating electric machine, the rotating electric machine directly connected to the axle drives the wheels, and the rotating electric machine has the construction described above.

### Advantageous Effects of Invention

The present invention can contribute to miniaturization of rotating electric machines because not only inside air but also the coil end part of the stator are prevented from becoming high in temperature, the permanent magnet is also prevented from causing demagnetization at high temperature in the case of permanent magnet type, and the cooling performance is improved.

In addition, rail vehicles and electric vehicles with larger output power can be obtained by being equipped with the miniaturized rotating electric machines.

### Brief Description of Drawings

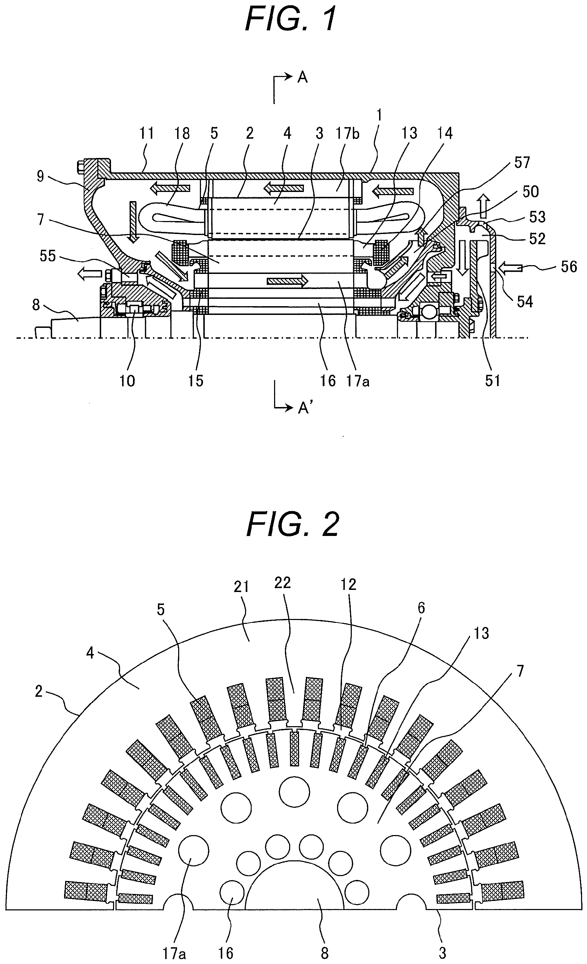

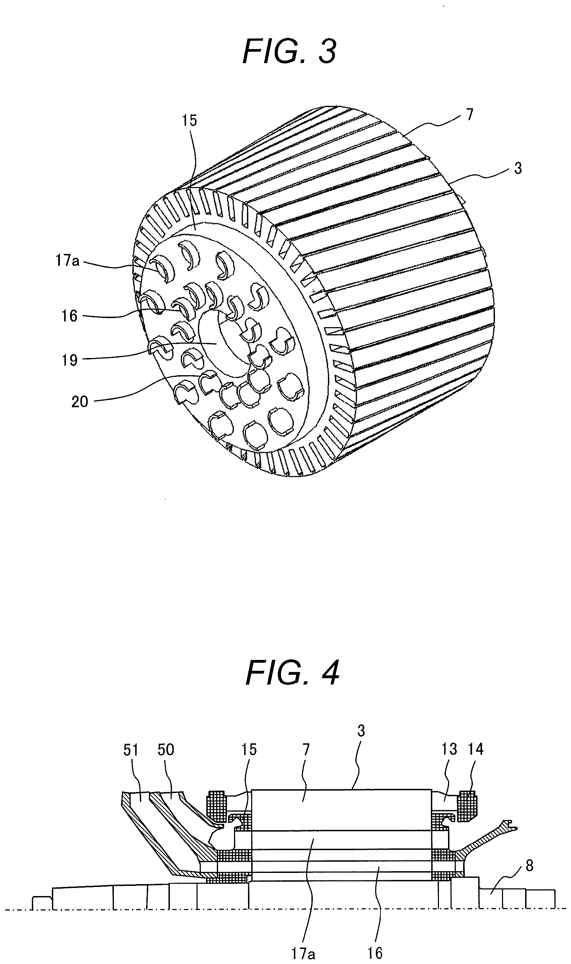

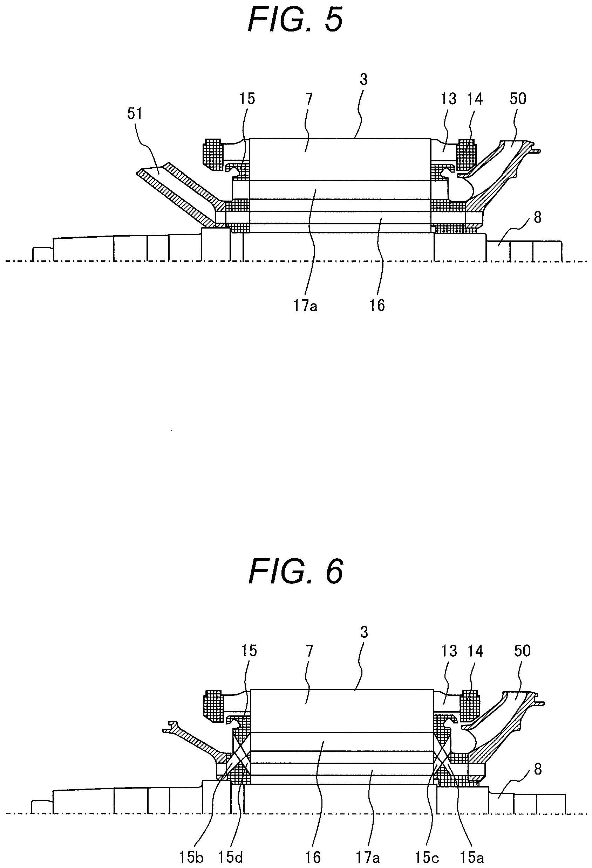

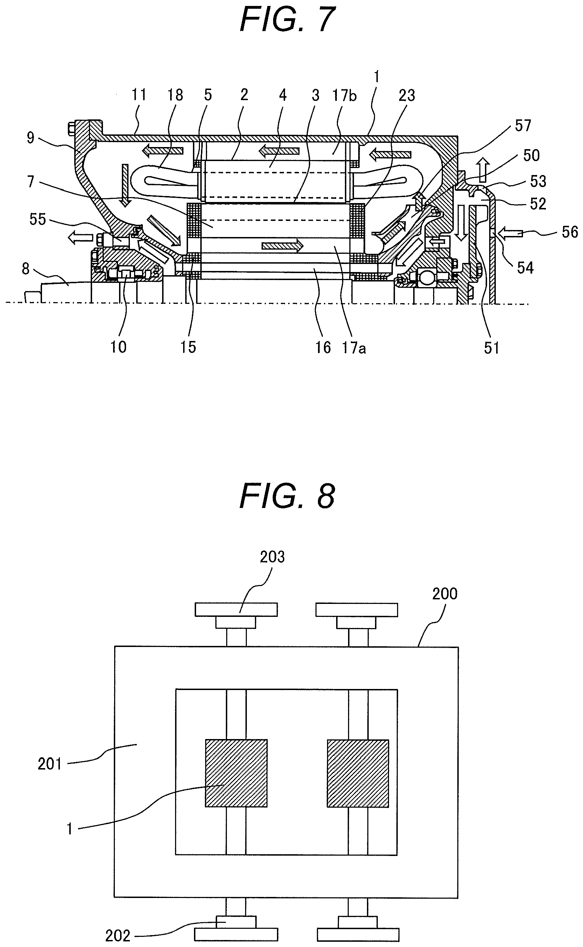

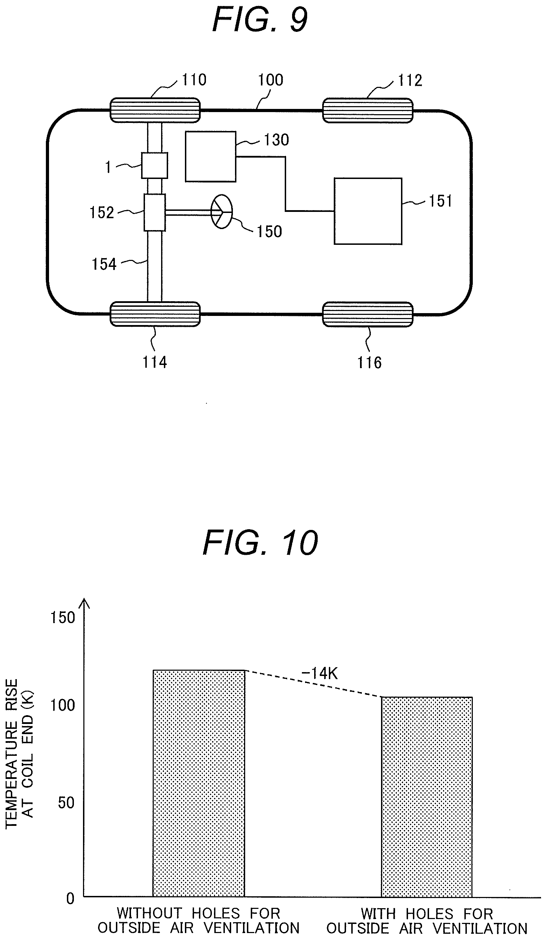

{Fig. 1} Fig. 1 is a cross-sectional view showing example 1 of the rotating electric machine.
{Fig. 2} Fig. 2 is a cross-sectional view taken along the line A-A' of Fig. 1.
{Fig. 3} Fig. 3 is a perspective view of a rotor showing example 2 of the rotating electric machine.
{Fig. 4} Fig. 4 is a cross-sectional view of upper part of a rotor showing example 3 of the rotating electric machine.
{Fig. 5} Fig. 5 is a cross-sectional view of upper part of a rotor showing example 4 of the rotating electric machine.
{Fig. 6} Fig. 6 is a cross-sectional view of upper part of a rotor showing an embodiment of the rotating electric machine of the invention.
{Fig. 7} Fig. 7 is a cross-sectional view of a permanent magnet motor that is example 6 of the rotating electric machine.
{Fig. 8} Fig. 8 is a configuration diagram of a rail vehicle equipped with the rotating electric machine of the invention.
{Fig. 9} Fig. 9 is a configuration diagram of an electric automobile equipped with the rotating electric machine of the invention showing another embodiment of the rotating electric machine of the invention.
{Fig. 10} Fig. 10 is a diagram comparatively showing reduction effect of temperature rise at coil end when there are holes for ventilating outside air in the case of example 1 and when there are no holes in the case of conventional art.

### Description of Embodiments

Hereinafter, rotating electric machines are described based on examples and embodiments shown diagrammatically. The same symbols are used for identical components or components having similar functions in each example and embodiment.

### Example 1

In Figs. 1 and 2, an induction motor is shown as example 1 of the rotating electric machines. In Fig. 2, housing is not shown in the drawing.

As shown in the drawing, a rotating electric machine 1 that is an induction motor, is made up of a stator 2 and a rotor 3. The stator 2 is roughly made up of a stator iron core 4, a poly-phase winding wire 5 wound around a plurality of stator slots 12 that are arranged at the inner circumference side of the stator iron core 4, formed at predetermined intervals in the circumferential direction, and extend in the axial direction, and a housing 11 that retains the stator iron core 4 at the inner circumference surface.

The stator iron core 4 made of laminated plural electromagnetic steel sheets has a cylindrical yoke part 21 (or referred to as core back part), a plurality of teeth parts 22 that project from the inner circumference surface of the yoke part 21 to the inner side of the diameter direction and extend in the axial direction along the inner circumference surface of the yoke part 21. The teeth parts 22 are arranged at regular intervals in the circumferential direction along the inner circumference surface of the yoke part 21. Also, between the teeth parts 22 of the stator 2, the stator slots 12 around which the winding wire 5 described above is wound.

On the other hand, the rotor 3 is roughly made up of a rotor iron core 7 arranged at a predetermined distance from the stator iron core 4 in the diameter direction and made of laminated plural electromagnetic steel sheets, rotor bars 13, which are magnetic field members, inserted in a plurality of the rotor slots 6 that are arranged at the outer circumference side of the rotor iron core 7, formed at predetermined intervals in the circumferential direction, and extend in the axial direction, endrings 14 made up of conductors that short-circuit each of the rotor bars 13 at the both axial end, a shaft 8 engaged with the rotor iron core 7, and the shaft 8 is rotatably retained by a bearing 10.

In addition, the rotor iron core 7 is fixed in the axial direction by a holding plate 15 for holding the rotor iron core 7, and the rotor 3 is equipped with an inner fan 50 for inside air ventilation and an outer fan 51 for outside air ventilation.

The bearing 10 is supported by an end bracket 9, and the end bracket 9 is fixed to the housing 11. The rotor 3 rotates in a clockwise direction or in a counterclockwise direction, and is driven as a motor.

And, in the example, a plurality of holes 16 for outside air ventilation that ventilate outside air and, at the outside of the holes 16, a plurality of holes 17a for inside air ventilation that ventilate inside air are formed with having predetermined intervals in the circumferential direction and passing through in the axial direction in the rotor iron core 7 of the rotor 3. In addition, the holes 16 for outside air ventilation and the holes 17a for inside air ventilation that ventilate inside air are similarly formed in the holding plate 15 for holding the rotor iron core 7. The holes 16 for outside air ventilation are located at the inner circumference side of the rotor 3 than the holes 17a for inside air ventilation.

That is, the rotor iron core 7 has a structure in which the holes 16 for outside air ventilation, the holes 17a for inside air ventilation, the rotor slots 6, and the hole of the shaft 8 are punched out. And the electromagnetic steel sheets through which the holes 16 for outside air ventilation, the holes 17a for inside air ventilation, the rotor slots 6, and the hole of the shaft 8 are punched and laminated, and the rotor bars 13 and the shaft 8 are inserted into the rotor slots 6 passing through the sheets and the hole for passing the shaft 8 respectively to compose the rotor 3.

Next, a ventilation route (cooling route) in which inside air and outside air are used according to the example is described by using Fig. 1.

As shown in the drawing, outside air 56 is inhaled from an outside air inlet 54 by an outer fan 51 to enter an air stagnation part 52, and dust is exhausted from a dust outlet 53 by centrifugal force caused by the outer fan 51.

Next, the outside air 56 from which dust is removed is passed through the holes 16 for outside air ventilation and exhausted from an outside air outlet 55 by the outer fan 51. On this occasion, the outside air 56 cools the rotor iron core 7, the rotor bars 13, and inside air 57 through the rotor iron core 7. On the other hand, the inside air 57 is passed through the coil end 18 that is located at the end in the axial direction of the winding wire 5 and endring 14, and is moved to duct 17b for inside air ventilation by the inner fan 50. On this occasion, the inside air 57 cools the coil end 18 and the endring 14.

Next, the inside air 57 passes through the duct 17b for inside air ventilation, and passes through the coil end 18 and the endring 14 that are located at the opposite end in the axial direction. On this occasion, the inside air 57 is cooled by the outside air 56 through the housing 11. The inside air 57 cooled by the outside air 56 cools the coil end 18 and the endring 14. Moreover, the inside air 57 that passed through the coil end 18 and the endring 14 passes through the duct 17a for inside air ventilation to circulate in the machine. On this occasion, the inside air 57 cools the rotator bar 13 through the rotor iron core 7 (by heat conduction). Moreover, the inside air 57 is cooled by heat exchange through the rotor iron core 7 with the outside air 56 that is ventilated in the holes 16 for outside air ventilation.

In other words, the inside air 57 cools the coil end 18 and the endring 14, and the outside air 56 cools the rotor iron core 7 and the rotator bars 13 of the rotor 3 and the inside air 57.

Structure of the example described above can contribute to miniaturization of rotating electric machines because not only the inside air but also the coil end part of the stator are prevented from becoming high in temperature, and the cooling performance is improved.

That is, according to the example, air temperature is reduced, and rotating electric machines can be miniaturized accordingly. In other words, since length in the diameter direction can be reduced when length in the axial direction is the same, and length in the axial direction can be reduced when length in the diameter direction is the same, the example can contribute to miniaturization of rotating electric machines.

In the example described above, a plurality of holes 16 for outside air ventilation and a plurality of holes 17a for inside air ventilation are formed in the circumferential direction at predetermined intervals, but the effect can be achieved with at least each one of these two types of holes.

In Fig. 10, reduction effect of temperature rise at the coil end is shown when example 1 that has holes for outside air ventilation is compared with conventional art that has no holes for outside air ventilation.

As shown in the diagram, it is understood that example 1 that has holes for outside air ventilation can reduce the temperature rise at the coil end by about 14K compared with conventional art that has no holes for outside air ventilation.

### Example 2

Next, example 2 of a rotating electric machine is described by using Fig. 3. In Fig. 3, a stator 2, a housing 11, a shaft 8, a bearing 10, rotor bars 13, and an endring 14 are not shown.

As shown in the drawing, differences of example 2 from example 1 are that a rotor iron core 7 is skewed in the circumferential direction, and vanes 20 are fixed to the holding plate 15 around holes 16 for outside air ventilation and holes 17a for inside air ventilation. Reference number 19 is a shaft hole.

According to the example described above, since the rotor iron core 7 is skewed and the vanes 20 are fixed to the holding plate 15, when the rotor 3 rotates, air is introduced into the holes 16 for outside air ventilation and the holes 17a for inside air ventilation by the vanes 20. In addition, because of skewing the rotor iron core 7, the holes 16 for outside air ventilation and the holes 17a for inside air ventilation are also skewed, whereby air resistance can be reduced to increase airflow rate. For this reason, the example can achieve a structure without an inner fan 50 for inside air ventilation and an outer fan 51 for outside air ventilation and obtain the similar effects as example 1 to contribute to further miniaturization of rotating electric machines.

### Example 3

Next, example 3 of a rotating electric machine is described by using Fig. 4. In Fig. 4, a stator 2, a bearing 10, and a housing 11 are not shown.

As shown in the drawing, difference of example 3 from example 1 is that an inner fan 50 and an outer fan 51 that are fixed to a rotor iron core 7 form an integral structure. The integral inner fan 50 and outer fan 51 are attached to the holding plate 15.

According to the example described above, not only the similar effects as example 1 are obtained but also lower costs can be achieved because airflow rate is increased and the structure is simplified compared to example 1 by making the inner fan 50 and the outer fan 51 integral structure.

### Example 4

Next, example 4 of a rotating electric machine is described by using Fig. 5. In Fig. 5, a stator 2, a bearing 10, and a housing 11 are not shown.

As shown in the drawing, a difference of example 4 from example 1 is that an inner fan 50 and an outer fan 51, which are fixed to holding plates 15 of a rotor iron core 7, are respectively located at one end in the axial direction of a rotor 3 and at the opposite end in the axial direction of the rotor 3.

According to the example described above, contribution to further miniaturization of rotating electric machines can be achieved because not only the similar effects as example 1 are obtained but also layout of end parts in the axial direction can be utilized effectively by placing the inner fan 50 and the outer fan 51 at both ends in the axial direction.

The inner fan 50 and the outer fan 51 may be respectively composed with the holding plates 15 that are placed at both ends in the axial direction of the rotor iron core 7 for pressing the rotor iron core 7 from the axial direction.

### Embodiment 1

Next, an embodiment of a rotating electric machine according to the invention is described by using Fig. 6. In Fig. 6, a stator 2, a bearing 10, a housing 11, and an outer fan 51 are not shown.

As shown in the drawing, a difference of embodiment 1 from example 1 is that holes 16 for outside air ventilation are arranged at the outer circumference side of the rotor 3 than holes 17a for inside air ventilation.

Structure of the embodiment described above makes outside air inhaled by the outer fan flow through the holding plate 15 into holes 16 for outside air ventilation. On this occasion, the holding plate 15 has a diagonal through hole 15a from the inner circumference side to the outer circumference side in the diameter direction, and the outside air is ventilated into the holes 16 for outside air ventilation arranged at the outer circumference side of the rotor 3. And the outside air that passed through the holes 16 for outside air ventilation is ventilated into the holding plate 15 at the opposite side in the axial direction, and is exhausted through diagonal through holes 15b from the outer circumference side to the inner circumference side in the diameter direction to the outside of the machine.

On the other hand, inside air that is circulated by an inner fan 50 is ventilated through the holding plate 15 that has diagonal through holes 15c from the outer circumference side to the inner circumference side in the diameter direction into the holes 17a for inside air ventilation arranged at the inner circumference side of the rotor 3. The inside air that passed through the holes 17a for inside air ventilation is ventilated through the holding plate 15 at the opposite side in the axial direction that has a diagonal through hole 15d from the inner circumference side to the outer circumference side in the diameter direction.

According to the embodiment described above, cooling performance of rotating electric machines can be improved because not only the similar effects as example 1 are obtained but also holes 17a for inside air ventilation can be placed near rotor bars 13 that generate large amount of heat to cool the rotor bars 13 effectively.

### Example 5

Next, example 5 of a rotating electric machine is described by using Fig. 7. In Fig. 7, the rotating electric machine is a permanent magnet motor.

As shown in the drawing, a difference of example 5 from example 1 is that rotor bars are used in a rotor 3 as an example of an induction motor in example 1, but permanent magnets 23 are used in the rotor 3 in this example.

That is, in the example, a plurality of the permanent magnets 23, which are magnetic field members, are arranged in magnet insertion holes of a rotor iron core 7 in such a way that the permanent magnets 23 have predetermined intervals in the circumferential direction and extend in the axial direction. Other structures are similar to the structures of Fig. 1.

According to the example described above, cooling performance of permanent magnet motors can be improved because not only the similar effects as example 1 are obtained but also outside air 56 passes through holes 16 for outside air ventilation and inside air 57 passes through holes 17a for inside air ventilation to control heat generation of permanent magnets 23, whereby fear of demagnetization at high temperature of the permanent magnets 23 is eliminated and, in addition, the inside air 57 is cooled.

It goes without saying that the present invention is applicable to both distributed winding type rotating electric machines and concentrated winding type rotating electric machines.

### Embodiment 2

Next, as embodiment 2 of the present invention, a rail vehicle equipped with a rotating electric machine of any one of embodiment and examples described above according to the invention is described by using Fig. 8.

As shown in the drawing, a rail vehicle 200 is made up of a truck 201 equipped with a rotating electric machine 1 of any one of the embodiment 1 and examples 1-5, a speed increasing gear 202, and wheels 203, and the rotating electric machine 1 drives the wheels 203 via the speed increasing gear 202.

In the embodiment, two rotating electric machines 1 are installed, but one or more than two rotating electric machines 1 may be installed for driving. In addition, in the above description, the rotating electric machines 1 are described to be used for driving the wheels 203 of the rail vehicle, but the rotating electric machines 1 can be used in electric operation construction machine drive units and all other drive units.

According to the embodiment described above, by applying rotating electric machines of the invention to electric vehicles, particularly to rail vehicles, since the rotating electric machines are miniaturized, rail vehicles having large output power can be provided.

### Embodiment 3

Next, as embodiment 3 of the present invention, an electric automobile equipped with a rotating electric machine of any one of the embodiments described above according to the invention is described by using Fig. 9.

As shown in the drawing, a body 100 of the electric automobile is supported with four wheels 110, 112, 114, and 116. Since the electric automobile is a front-wheel drive automobile, a rotating electric machine of any one of embodiment 1 and examples 1 to 5 is directly connected to anterior axle 154.

Driving torque of the rotating electric machine 1 is controlled by a control device 130. As a power source of the control device 130, a battery 151 is installed, electric power is supplied from the battery 151 through the control device 130 to the rotating electric machine 1, and the rotating electric machine 1 is driven to rotate wheels 110, 114. Rotary motion of a steering wheel 150 is transmitted via transmission mechanism made up of a steering gear 152, a tie rod, a knuckle arm, etc. to two wheels 110, 114, angles of which are changed.

According to the embodiment described above, by applying rotating electric machines of the invention to electric vehicles, particularly to electric automobiles, since the rotating electric machines are miniaturized, electric automobiles having large output power can be provided.

Features, components and specific details of the structures of the above-described embodiments and examples may be exchanged or combined to form further embodiments optimized for the respective application as far as these further embodiments fall under the scope of the appended claims.

## Claims

1. A rotating electric machine comprising:
a stator (2) having an iron core (4); and
a rotor (3) comprised of a rotor iron core (7) arranged at a predetermined distance from the stator iron core (4) in the diameter direction through a predetermined air gap at the inner diameter side of the stator (2), wherein
the stator has a plurality of stator slots (12) that extend in the axial direction and are formed in the circumferential direction at predetermined intervals at the inner diameter side of the stator iron core (4), and stator coils attached in the plurality of stator slots (12), the rotor has a plurality of rotor slots (6) that extend in the axial direction and are formed in the circumferential direction at predetermined intervals at the outer circumference side of the rotor iron core (7), and magnetic field members inserted in the rotor slots (6), and wherein
the rotor iron core (7) has an outside air ventilation hole (16) for ventilating air outside the machine and an inside air ventilation hole (17a) for ventilating air inside the machine (1), **characterised in that**
the hole for outside air ventilation (16) is arranged at a circumference side of the rotor (3) which is outer than that of the hole for inside air ventilation (17a).

2. A rotating electric machine according to Claim 1, comprising rotor bars (13) inserted in the plurality of rotor slots (6), endrings that short-circuit each of the rotor bars (13) at the both axial ends, and a shaft engaged with the rotor iron core (7)

3. A rotating electric machine comprising:
a stator (2) having an iron core (4); and
a rotor (3) comprised of a rotor iron core (7) arranged at a predetermined distance from the stator iron core (4) in the diameter direction through a predetermined air gap at the inner diameter side of the stator (2), wherein
the stator has a plurality of stator slots (12) that extend in the axial direction and are formed in the circumferential direction at predetermined intervals at the inner diameter side of the stator iron core (4), and stator coils attached in the plurality of stator slots (12), the rotor has a plurality of magnet insertion holes that extend in the axial direction and are formed in the circumferential direction at predetermined intervals, permanent magnets inserted in the plurality of magnet insertion holes, and a shaft (8) engaged with the rotor iron core (7), and wherein
the rotor iron core (7) has an outside air ventilation hole (16) for ventilating air outside the machine (1) and an inside air ventilation hole (17a) for ventilating air inside the machine (1), **characterised in that**
the hole for outside air ventilation (16) is arranged at a circumference side of the rotor (3) which is outer than that of the hole for inside air ventilation (17a).

4. A rotating electric machine according to Claim 3, wherein
said intervals are at the outer circumference side of the rotor iron core (7), rotor bars (13) inserted in a plurality of rotor slots (6), endrings that short-circuit each of the rotor bars (13) at the both axial ends.

5. A rotating electric machine according to claim 3, wherein
said intervals are at the outer circumference side of the rotor iron core (7), and magnetic field members inserted in the rotor slots (6).

6. The rotating electric machine according to any one of Claim 1 to Claim 5 , wherein
the rotor (3) is equipped with the inner fan (50) for inside air (57) ventilation and the outer fan (51) for outside air ventilation (56), and cooling air is led to the hole for inside air ventilation (17a) by the inner fan (50) and cooling air is led to the hole for outside air ventilation (16) by the outer fan (51).

7. The rotating electric machine according to any one of Claim 1 to Claim 5, wherein
the hole for outside air ventilation (16) and the hole for inside air ventilation (17a) at the inner circumference part of the rotor (3) are skewed in the circumferential direction, vanes are fixed to the holding plate, which holds the rotor iron core (7) from the axial direction, around inlet of the holes for outside air ventilation (16) and the holes for inside air ventilation (17a), and wherein
air is ventilated into the hole for outside air (56) ventilation and the hole for inside air ventilation via the vanes by rotation of the rotor (3).

8. The rotating electric machine according to Claim 6, wherein
the inner fan (50) and the outer fan (51) have an integral structure.

9. The rotating electric machine according to Claim 6, wherein
the inner fan (50) is located at one end in the axial direction of the rotor (3) and the outer fan (51) is located at the opposite end in the axial direction of the rotor (3).

10. The rotating electric machine according to Claim 9, wherein
the inner fan (50) and the outer fan (51) are composed integrally with the holding plates that are placed at the both ends in the axial direction of the rotor iron core (7) for pressing the rotor iron core (7) from the axial direction.

11. The rotating electric machine according to Claim 10, wherein
the inner fan (50) and the outer fan (51) are respectively composed integrally with the holding plates that are placed at the both ends in the axial direction of the rotor iron core (7).

12. A rail vehicle comprising:
a truck;
a rotating electric machine (1);
a speed increasing gear; and
wheels, wherein
the rotating electric machine (1) drives the wheels via the speed increasing gear, and wherein
the rotating electric machine (1) is the rotating electric machine (1) according to any one of Claim 1 to Claim 11.

13. An electric vehicle comprising:
a body;
wheels;
a shaft; and
a rotating electric machine (1), wherein
the rotating electric machine (1) directly connected to the axle drives the wheels, and wherein
the rotating electric machine (1) is the rotating electric machine (1) according to any one of Claim 1 to Claim 11.

## Patentansprüche

1. Drehende Elektromaschine, die Folgendes umfasst:
einen Stator (2), der einen Eisenkern (4) besitzt und
einen Rotor (3), der aus einem Rotoreisenkern (7) besteht, der in einem vorgegebenen Abstand vom Statoreisenkern (4) in der Durchmesserrichtung über einen vorgegebenen Luftspalt bei der Innendurchmesserseite des Stators (2) angeordnet ist, wobei
der Stator mehrere Statorschlitze (12), die in axialer Richtung verlaufen und in Umfangsrichtung in vorgegebenen Abständen bei der Innendurchmesserseite des Statoreisenkerns (4) gebildet sind, und Statorspulen, die in den mehreren Statorschlitzen (12) angebracht sind, besitzt und der Rotor mehrere Rotorschlitze (6), die in axialer Richtung verlaufen und in Umfangsrichtung in vorgegebenen Abständen bei der Außenumfangsseite des Rotoreisenkerns (7) gebildet sind, und Magnetfeldelemente, die in die Rotorschlitze (6) eingesetzt sind, besitzt und
der Rotoreisenkern (7) eine Außenluftbelüftungsöffnung (16), um Luft aus der Maschine abzuführen, und eine Innenbelüftungsöffnung (17a), um der Maschine (1) Luft zuzuführen, besitzt, **dadurch gekennzeichnet, dass**
die Öffnung für Außenluftbelüftung (16) bei einer Umfangsseite des Rotors (3) angeordnet ist, die weiter außen liegt als die der Öffnung für Innenfluftbelüftung (17a).

2. Drehende Elektromaschine nach Anspruch 1, die Rotorstäbe (13), die in die mehreren Rotorschlitze (6) eingesetzt sind, Stirnringe, die jeden der Rotorstäbe (13) bei den beiden axialen Enden kurzschließen, und eine Welle, die mit dem Rotoreisenkern (7) in Eingriff ist, umfasst.

3. Drehende Elektromaschine, die Folgendes umfasst:
einen Stator (2), der einen Eisenkern (4) besitzt und
einen Rotor (3), der aus einem Rotoreisenkern (7) besteht, der in einem vorgegebenen Abstand vom Statoreisenkern (4) in der Durchmesserrichtung über einen vorgegebenen Luftspalt bei der Innendurchmesserseite des Stators (2) angeordnet ist, wobei
der Stator mehrere Statorschlitze (12), die in axialer Richtung verlaufen und in Umfangsrichtung in vorgegebenen Abständen bei der Innendurchmesserseite des Statoreisenkerns (4) gebildet sind, und Statorspulen, die in den mehreren Statorschlitzen (12) angebracht sind, besitzt und der Rotor mehrere Magneteinsetzöffnungen, die in axialer Richtung verlaufen und in Umfangsrichtung in vorgegebenen Abständen gebildet sind, Permanentmagneten, die in die mehreren Magneteinsetzöffnungen eingesetzt sind, und eine Welle (8), die in Eingriff mit dem Rotoreisenkern (7) ist, besitzt und
der Rotoreisenkern (7) eine Außenluftbelüftungsöffnung (16), um Luft aus der Maschine abzuführen, und eine Innenbelüftungsöffnung (17a), um der Maschine (1) Luft zuzuführen, besitzt, **dadurch gekennzeichnet, dass**
die Öffnung für Außenluftbelüftung (16) bei einer Umfangsseite des Rotors (3) angeordnet ist, die weiter außen liegt als die der Öffnung für Innenfluftbelüftung (17a).

4. Drehende Elektromaschine nach Anspruch 3, wobei
die Intervalle bei der Außenumfangsseite des Rotoreisenkerns (7) liegen, Rotorstäbe (13) in die mehreren Rotorschlitze (6) eingesetzt sind und Stirnringe jeden der Rotorstäbe (13) bei den beiden axialen Enden kurzschließen.

5. Drehende Elektromaschine nach Anspruch 3, wobei
die Intervalle bei der Außenumfangsseite des Rotoreisenkerns (7) liegen und Magnetfeldelemente in die Rotorschlitze (6) eingesetzt sind.

6. Drehende Elektromaschine nach einem der Ansprüche 1 bis 5, wobei
der Rotor (3) mit dem Innenlüfter (50) für Innenluftbelüftung (57) und dem Außenlüfter (51) für Außenluftbelüftung (56) ausgestattet ist und Kühlluft durch den Innenlüfter (50) zu der Öffnung für Innenluftbelüftung (17a) geführt wird und Kühlluft durch den Außenlüfter (51) zu der Öffnung für Außenluftbelüftung (16) geführt wird.

7. Drehende Elektromaschine nach einem der Ansprüche 1 bis 5, wobei
die Öffnung für Außenluftbelüftung (16) und die Öffnung für Innenluftbelüftung (17a) bei dem Innenumfangsteil des Rotors (3) in Umfangsrichtung schief sind und Schaufeln an der Halteplatte, die den Rotoreisenkern (7) aus axialer Richtung hält, um einen Einlass der Öffnungen für Außenluftbelüftung (16) und den Öffnungen für Innenluftbelüftung (17a) befestigt sind, und
Luft durch Drehen des Rotors (3) über die Schaufeln in die Öffnung für Außenluftbelüftung (56) und die Öffnung für Innenluftbelüftung zugeführt wird.

8. Drehende Elektromaschine nach Anspruch 6, wobei
der Innenlüfter (50) und der Außenlüfter (51) eine fest eingebaute Struktur besitzen.

9. Drehende Elektromaschine nach Anspruch 6, wobei
der Innenlüfter (50) sich an einem Ende in axialer Richtung des Rotors (3) befindet und der Außenlüfter (51) sich an dem gegenüberliegenden Ende in axialer Richtung des Rotors (3) befindet.

10. Drehende Elektromaschine nach Anspruch 9, wobei
der Innenlüfter (50) und der Außenlüfter (51) einteilig mit den Halteplatten, die an den beiden Enden in axialer Richtung des Rotoreisenkerns (7) positioniert sind, um den Rotoreisenkern (7) aus axialer Richtung zusammenzudrücken, aufgebaut sind.

11. Drehende Elektromaschine nach Anspruch 10, wobei
der Innenlüfter (50) und der Außenlüfter (51) jeweils einteilig mit den Halteplatten, die sich an den beiden Enden in axialer Richtung des Rotoreisenkerns (7) befinden, aufgebaut sind.

12. Schienenfahrzeug, das Folgendes umfasst:
ein Drehgestell;
eine drehende Elektromaschine (1);
ein geschwindigkeitserhöhendes Getriebe und
Räder, wobei
die drehende Elektromaschine (1) die Räder über das geschwindigkeitserhöhende Getriebe antreibt und
die drehende Elektromaschine (1) die drehende Elektromaschine (1) nach einem der Ansprüche 1 bis 11 ist.

13. Elektrofahrzeug, das Folgendes umfasst:
eine Karosserie;
Räder;
eine Welle und
eine drehende Elektromaschine (1), wobei
die drehende Elektromaschine (1) direkt mit den Achsantrieben der Räder verbunden ist und
die drehende Elektromaschine (1) die drehende Elektromaschine (1) nach einem der Ansprüche 1 bis 11 ist.

## Revendications

1. Machine électrique rotative comprenant :
un stator (2) ayant un noyau en fer (4) ; et
un rotor (3) constitué d'un noyau de rotor en fer (7) agencé à une distance prédéterminée du noyau de stator en fer (4) dans la direction diamétrale à travers un interstice d'air prédéterminé au niveau du côté du diamètre intérieur du stator (2),
dans laquelle le stator a une pluralité de fentes de stator (12) qui s'étendent dans la direction axiale et sont formées dans la direction circonférentielle à des intervalles prédéterminés au niveau du côté du diamètre intérieur du noyau de stator en fer (4), et des bobines de stator fixées dans la pluralité de fentes de stator (12), le rotor a une pluralité de fentes de rotor (6) qui s'étendent dans la direction axiale et sont formées dans la direction circonférentielle à des intervalles prédéterminés au niveau du côté de la circonférence extérieure du noyau de rotor en fer (7), et des éléments à champ magnétique insérés dans les fentes de rotor (6),
et dans laquelle le noyau de rotor en fer (7) a un trou de ventilation d'air extérieur (16) pour ventiler l'air à l'extérieur de la machine et un trou de ventilation d'air intérieur (17a) pour ventiler de l'air à l'intérieur de la machine (1),
**caractérisée en ce que**
le trou de ventilation d'air extérieur (16) est agencé au niveau d'un côté circonférentiel du rotor (3) qui est plus à l'extérieur que celui du trou de ventilation d'air intérieur (17a).

2. Machine électrique rotative selon la revendication 1, comprenant des barres de rotor (13) insérées dans la pluralité de fentes de rotor (6), des bagues terminales qui court-circuitent chacune des barres de rotor (13) au niveau des deux extrémités axiales, et un arbre engagé avec le noyau de rotor en fer (7).

3. Machine électrique rotative comprenant :
un stator (2) ayant un noyau en fer (4) ; et
un rotor (3) constitué d'un noyau de rotor en fer (7) agencé à une distance prédéterminée du noyau de stator en fer (4) dans la direction diamétrale à travers un interstice d'air prédéterminé au niveau du côté du diamètre intérieur du stator (2),
dans laquelle le stator a une pluralité de fentes de stator (12) qui s'étendent dans la direction axiale et sont formées dans la direction circonférentielle à des intervalles prédéterminés au niveau du côté du diamètre intérieur du noyau de stator en fer (4), et des bobines de stator fixées dans la pluralité de fentes de stator (12), le rotor a une pluralité de trous d'insertion d'aimant qui s'étendent dans la direction axiale et sont formés dans la direction circonférentielle à des intervalles prédéterminés, des aimants permanents insérés dans la pluralité de trous d'insertion d'aimant, et un arbre (8) engagé avec le noyau de rotor en fer (7), et
dans laquelle le noyau de rotor en fer (7) a un trou de ventilation d'air extérieur (16) pour ventiler l'air à l'extérieur de la machine (1) et un trou de ventilation d'air intérieur (17a) pour ventiler de l'air à l'intérieur de la machine (1),
**caractérisée en ce que**
le trou de ventilation d'air extérieur (16) est agencé au niveau d'un côté circonférentiel du rotor (3) qui est plus à l'extérieur que celui du trou de ventilation d'air intérieur (17a).

4. Machine électrique rotative selon la revendication 3,
dans laquelle lesdits intervalles sont au niveau du côté circonférentiel extérieur du noyau de rotor en fer (7), des barres de rotor (13) sont insérées dans une pluralité de fentes de rotor (6), et des bagues terminales court-circuitent chacune des barres de rotor (13) au niveau des deux extrémités axiales.

5. Machine électrique rotative selon la revendication 3,
dans laquelle lesdits intervalles sont au niveau du côté circonférentiel extérieur du noyau de rotor en fer (7), et les éléments à champ magnétique sont insérés dans les fentes du rotor (6).

6. Machine électrique rotative selon l'une quelconque des revendications 1 à 5,
dans laquelle le rotor (3) est équipé du ventilateur intérieur (50) pour la ventilation d'air intérieur (57) et du ventilateur extérieur (51) pour la ventilation d'air extérieur (56), et de l'air de refroidissement est conduit jusqu'au trou de ventilation d'air intérieur (17a) par le ventilateur intérieur (50) et de l'air de refroidissement est conduit jusqu'au trou de ventilation d'air extérieur (16) par le ventilateur extérieur (51).

7. Machine électrique rotative selon l'une quelconque des revendications 1 à 5,
dans laquelle le trou de ventilation d'air extérieur (16) et le trou de ventilation d'air intérieur (17a) sur la partie circonférentielle intérieure du rotor (3) sont inclinés dans la direction circonférentielle, des aubes sont fixées à la plaque de maintien qui maintient le noyau de rotor en fer (7) depuis la direction axiale, autour de l'entrée des trous de ventilation d'air extérieur (16) et des trous de ventilation d'air intérieur (17a), et
dans laquelle l'air est ventilé jusque dans le trou de ventilation d'air extérieur (56) et le trou de ventilation d'air intérieur via les aubes du fait de la rotation du rotor (3).

8. Machine électrique rotative selon la revendication 6,
dans laquelle le ventilateur intérieur (50) et le ventilateur extérieur (51) ont une structure intégrale.

9. Machine électrique rotative selon la revendication 6,
dans laquelle le ventilateur intérieur (50) est situé à une extrémité dans la direction axiale du rotor (3) et le ventilateur extérieur (51) est situé à l'extrémité opposée dans la direction axiale du rotor (3).

10. Machine électrique rotative selon la revendication 9,
dans laquelle le ventilateur intérieur (50) et le ventilateur extérieur (51) sont composés intégralement avec les plaques de maintien qui sont placées aux deux extrémités dans la direction axiale du noyau de rotor en fer (7) pour presser le noyau de rotor en fer (7) depuis la direction axiale.

11. Machine électrique rotative selon la revendication 10,
dans laquelle le ventilateur intérieur (50) et le ventilateur extérieur (51) sont respectivement composés intégralement avec les plaques de maintien qui sont placées aux deux extrémités dans la direction axiale du noyau de rotor en fer (7).

12. Véhicule ferroviaire comprenant :
un fourgon ;
une machine électrique rotative (1) ;
un engrenage d'accélération de la vitesse ; et
des roues,
dans laquelle la machine électrique rotative (1) entraîne les roues par l'intermédiaire de l'engrenage d'augmentation de la vitesse, et
dans laquelle la machine électrique rotative (1) est la machine électrique rotative (1) selon l'une quelconque des revendications 1 à 11.

13. Véhicule électrique comprenant:
un corps ;
des roues ;
un arbre ;
une machine électrique rotative (1) ; dans lequel
la machine électrique rotative (1) directement connectée à l'essieu entraîne les roues, et dans lequel
la machine électrique rotative (1) est la machine électrique rotative (1) selon l'une quelconque des revendications 1 à 11.
